# EUROPEAN PATENT APPLICATION

(11) **EP 4 826 107 A1**
(43) Date of publication of application: **21.10.2026**
(21) Application number: 24904085.8
(22) Date of filing: 27.11.2024
(51) Int. Cl.: C23C 2/06, C22C 38/38, C22C 38/06, C22C 38/00, C22C 38/32, C22C 38/22, C22C 38/28, C22C 38/24, C22C 38/26, C21D 8/02

(54) **STEEL SHEET FOR HOT PRESS FORMING, HOT PRESS FORMED MEMBER AND METHODS FOR PRODUCING SAME**

(30) Priority: 15.12.2023 KR 20230183863
(71) Applicant: POSCO Co., Ltd, Gyeongsangbuk-do 37859 (KR)
(72) Inventor: KIM, Seong-Woo, Gwangyang-si, Jeollanam-do 57807 (KR); LEE, Sea-Woong, Gwangyang-si, Jeollanam-do 57807 (KR); KIM, Sang-Heon, Gwangyang-si, Jeollanam-do 57807 (KR); OH, Jin-Keun, Gwangyang-si, Jeollanam-do 57807 (KR)
(74) Representative: Meissner Bolte Partnerschaft mbB
(86) International application number: PCT/KR2024/019011
(87) International publication number: WO 2025/127520

(57) **Abstract**

The present invention relates to a steel sheet suitable for the material of a vehicle body component and, more specifically, to a steel sheet for hot press forming, suitable for hot press forming, a hot press formed member manufactured therefrom, and methods for producing same.

## Description

### Technical Field

The present disclosure relates to a steel sheet suitable for a material of a vehicle body component and, more particularly, to a steel sheet for hot press forming, suitable for hot press forming, a hot press formed member manufactured therefrom, and a method for manufacturing the same.

### Background Art

Recently, as regulations on passenger protection or the like have been stricter along with improvements in fuel efficiency through the lightening of automobiles, in order to achieve this, the application of a hot press formed member as a material of a structural member of automobiles or the like is increasing. A hot press formed member may be obtained by applying a hot press forming process to a certain steel sheet, whereby the hot press formed member may have high strength. Accordingly, the hot press formed member may be more appropriately used in bumpers, doors, filler reinforcements, or the like requiring ultra-high strength or energy absorption capacity.

As a technology regarding hot press forming of a steel sheet as such, Patent Document 1 has been suggested. In the present document, a structure of a member manufactured by heating an Al-Si-based plating steel sheet to 850°C or higher and then performing hot forming and quenching by press is formed with martensite, thereby securing ultra-high strength with high tensile strength. As such, since the hot press formed member is obtained by forming a steel sheet at a high temperature, when a component having a complicated shape is manufactured, easy forming is allowed. In addition, since an increase in strength may be promoted by performing quenching in a mold, a lightening effect due to increased strength may be expected.

Meanwhile, a martensite structure is known to have low resistance to hydrogen embrittlement. However, since hydrogen dissociated from moisture in the atmosphere in a heating furnace during heating at a high temperature for hot press forming of a steel sheet is introduced, a hot press formed member of which the structure is mainly formed of a martensite phase becomes a state of a high diffusible hydrogen amount in a steel, and thus, the hot press formed member becomes a state of being more vulnerable to hydrogen embrittlement. In particular, when a strength required for the hot press formed member is a grade of 1.8 GPa or higher, the higher the strength is, more easily a hydrogen embrittlement phenomenon occurs, and thus, there are limitations to expanded application to components for various automobiles.

Therefore, in order to apply the hot press formed member of a grade of 1.8 GPa or higher more broadly as components for various automobiles, a problem of hydrogen embrittlement of the hot press formed member should be fundamentally solved, and thus, technology development therefor is needed.

(Patent Document 1) U.S. Patent Publication No. 6296805

### Summary of Invention

### Technical Problem

An aspect of the present disclosure is to provide a steel sheet appropriate for a material of automobile structural members or the like, and in particular, a plating steel sheet for hot press forming appropriate as a hot press forming process and a method for manufacturing the same.

Another aspect of the present disclosure is to provide a hot press formed member obtained from a plating steel sheet for hot press forming, in particular, a hot press formed member having improved resistance to hydrogen embrittlement while having ultra-high strength.

An object of the present disclosure is not limited to the above description. A person skilled in the art will have no difficulty in understanding further objects of the present disclosure from the overall descriptions of the present specification.

### Solution to Problem

According to an aspect of the present disclosure, a plated steel sheet for hot press forming includes: a base steel sheet including 0.30 to 0.50% by weight of carbon (C), and an aluminum-based plating layer formed on at least one surface of the base steel sheet.

In an example embodiment of the present disclosure, an area in which a ratio (Cₘᵢₙ/C₀) between a minimum carbon content (Cₘᵢₙ) in a surface layer part and a carbon content (C₀) in the base steel sheet satisfies 0.5 to 0.8 may be included, the surface layer part being defined as being within 30 µm in a thickness direction of the base steel sheet from an interface between the base steel sheet and the plating layer.

In an example embodiment of the present disclosure, an internal oxide may be included within a depth of 0.5 to 5.0 µm in the thickness direction of the base steel sheet from the interface between the base steel sheet and the plating layer. As an example, the internal oxide may be formed in a grain boundary.

In an example embodiment of the present disclosure, the base steel sheet may include one or more carbides of V-based carbides, Mo-based carbides, and V-Mo composite carbides, and the carbides may be included in an amount of 10⁵/mm² or more. In addition, in an example embodiment of the present disclosure, the carbides may have an average size of 1 to 100 nm.

As such, the steel sheet for hot press forming according to an aspect of the present disclosure includes an area having a decreased carbon content near an interface between the base steel sheet and the plating layer and a grain boundary internal oxide, and thus, has an effect of preventing brittleness by hydrogen permeation during heating at a high temperature for hot press forming the steel sheet for hot press forming. The effect may also be obtained by the carbides according to an example embodiment of the present disclosure.

In an example embodiment of the present disclosure, the base steel sheet may further include, by weight: 0.05 to 1.00% of silicon (Si), 0.4~3.0% of manganese (Mn), 0.001 to 0.050% of phosphorus (P), 0.0001 to 0.0200% of sulfur (S), 0.01 to 0.10% of aluminum (Al), 0.001 to 0.020% of nitrogen (N), 0.0001 to 0.0100% of boron (B), 0.01 to 0.50% of chromium (Cr), 0.010 to 0.050% of titanium (Ti), a total content of 0.10 to 0.50% of one or more of molybdenum (Mo), niobium (Nb), and vanadium (V), a remainder of Fe, and unavoidable impurities.

In an example embodiment of the present disclosure, the aluminum-based plating layer may include, by weight: 6.0 to 12.0% of silicon (Si), 1.0 to 9.0% of iron (Fe), a remainder of Al, and other unavoidable impurities. In addition, in an example embodiment of the present disclosure, the aluminum-based plating layer may have a thickness of 5 to 40 µm.

According to another aspect of the present disclosure, a method for manufacturing a plated steel sheet for hot press forming includes: preparing a steel slab including 0.30 to 0.50% by weight of carbon (C), and heating the steel slab in a temperature range of 1050 to 1300°C; after the heating, finish hot rolling the steel slab in a temperature range of 800 to 950°C to obtain a hot-rolled steel sheet; winding the hot-rolled steel sheet in a temperature range of 500 to 700°C; after the winding, performing an annealing treatment of heating the hot-rolled steel sheet in a temperature range of 740 to 860°C, and then maintaining the steel sheet for 50 to 150 seconds in an atmosphere of a dew point of -10 to +20°C; after the annealing treatment, performing a first carbon diffusion of cooling the hot-rolled steel sheet at a cooling rate of 0.3 to 2.0°C/s in an atmosphere of a dew point of - 30 to -60°C; after the first carbon diffusion, dipping the hot-rolled steel sheet into an aluminum-based plating bath to obtain an aluminum-based plated steel sheet; and performing a second carbon diffusion of cooling the aluminum-based plated steel sheet down to 400°C at a cooling rate of 4 to 12°C/s.

In an example embodiment of the present disclosure, the annealing treatment may be performed with an atmosphere gas which is controlled with 5 to 15 vol% of H₂-a reminder of N₂ and unavoidable impurities.

According to an example embodiment of the present disclosure, a steel sheet for hot press forming including an area having a decreased carbon content in an interface part between the base steel sheet and the plating layer and an internal oxide may be provided by performing a series of the annealing treatment, the carbon diffusion process, or the like.

In an example embodiment of the present disclosure, performing cold rolling at a reduction rate of 20 to 80% is performed before the annealing treatment of the hot-rolled steel sheet after the winding to obtain a cold-rolled steel sheet may be further included.

In an example embodiment of the present disclosure, the aluminum-based plating bath may include, by weight: 6.0 to 12.0% of silicon (Si), 1.0 to 9.0% of iron (Fe), a remainder of Al, and other unavoidable impurities, and the obtaining of a plated steel sheet may be performed with a plating amount of 30 to 130 g/m² based on one surface.

The steel slab according to an example embodiment of the present disclosure may have the alloy composition described above.

According to still another aspect of the present disclosure, a hot press formed member includes: a base steel sheet including 0.30 to 0.50% by weight of carbon (C), and an aluminum-based plating layer formed on at least one surface of the base steel sheet.

In an example embodiment of the present disclosure, an area in which a ratio (Cₘₐₓ/C₀) between a maximum carbon content (Cₘₐₓ) in a surface layer part and a carbon content (C₀) in the base steel sheet satisfies 0.8 to 1.1 may be included, the surface layer part being defined as being within 30 µm in a thickness direction of the base steel sheet from an interface between the base steel sheet and the plating layer.

As such, the hot press formed member according to an example embodiment of the present disclosure may have excellent resistance to hydrogen added during the hot press forming by including an area in which carbon exists at a certain ratio near the interface between the base steel sheet and the plating layer.

According to an example embodiment of the present disclosure, the hot press formed member may include a carbide present in the base steel sheet of the steel sheet for hot press forming mentioned above as it is.

In an example embodiment of the present disclosure, the hot press formed member may have a tensile strength of 1800 MPa or more.

The base steel sheet and the plating layer according to an example embodiment of the present disclosure may have the alloy composition described above.

### Advantageous Effects of Invention

According to an aspect of the present disclosure, a plated steel sheet for hot press forming appropriate as a material of a vehicle body component or the like may be provided, and a hot press formed member obtained using the plated steel sheet for hot press forming may be provided.

In addition, according to the present disclosure, a hot press formed member having excellent resistance to hydrogen embrittlement while having ultra-high strength may be provided.

Various and beneficial merits and effects of the present disclosure are not limited to the descriptions above, and may be more easily understood in a process of describing specific exemplary embodiments in the present disclosure.

### Brief Description of Drawings

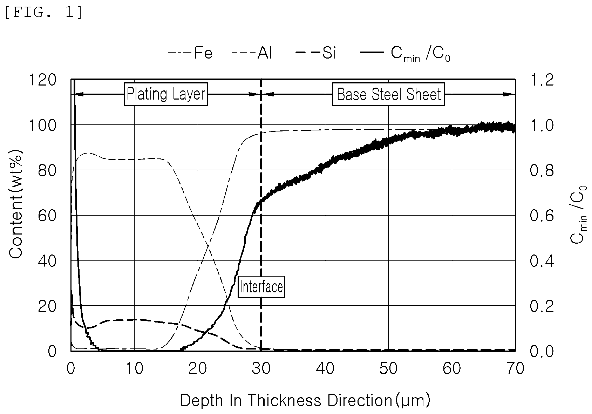

FIG. 1 is a graph illustrating the results of component analysis with a glow discharge spectrometry (GDS) in a thickness direction from a surface of a plating layer of a steel sheet for hot press forming (Inventive Example 1) according to an example embodiment of the present disclosure, and a calculated value of Cₘᵢₙ/C₀ measured therefrom.

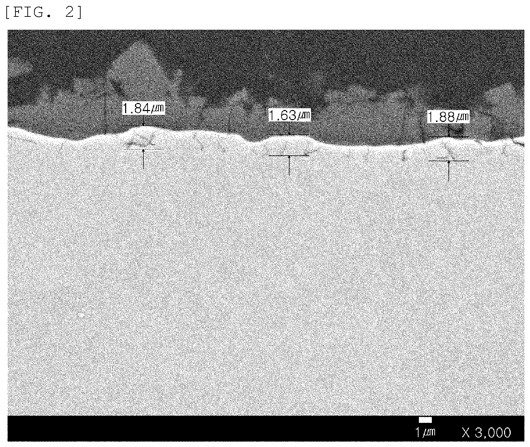

FIG. 2 is a photograph of a cross section in a thickness direction of a base steel sheet from an interface between the base steel sheet and the plating layer of the steel sheet for hot press forming (Inventive Example 1) according to an example embodiment of the present disclosure, which was taken with SEM.

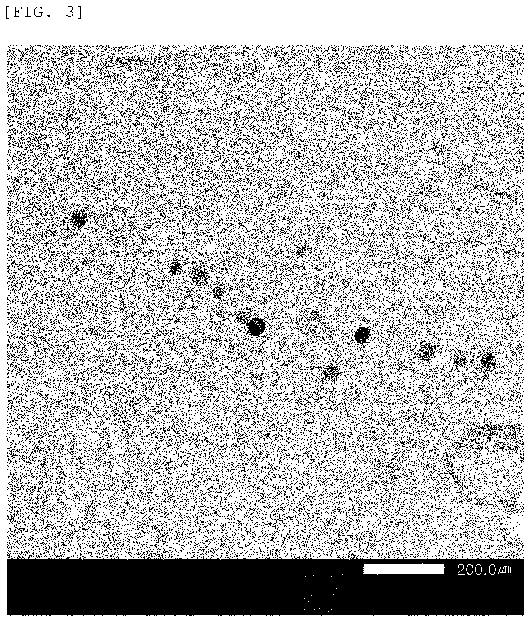

FIG. 3 illustrates the results of observing a carbide present in the base steel sheet of the steel sheet for hot press forming (Inventive Example 1) according to an example embodiment of the present disclosure, with TEM.

### Best Mode for Invention

Though it is not essential, it should be noted that the technical solution according to each aspect of the present disclosure may be useful in the technical solution of other aspects. In addition, the composition and the various useful parameters according to each aspect of the present disclosure may be appropriately combined with other aspects to obtain favorable effects.

Hereinafter, preferred exemplary embodiments in the present disclosure will now be described. However, the embodiments in the present disclosure may be modified in many different forms and the scope of the disclosure should not be limited to the embodiments set forth herein. Rather, the embodiments of the present disclosure are provided so that the present disclosure will be thorough and complete, and will fully convey the concept of the disclosure to those skilled in the art.

The inventors of the present disclosure conducted an in-depth study on a method for improving low hydrogen resistance of a hot press formed member obtained by hot press forming a steel sheet for hot press forming, in providing a steel sheet appropriate as a material of a vehicle body component or the like, in particular, a steel sheet for hot press forming appropriate for hot press forming.

In particular, the inventors of the present disclosure conducted an in-depth study on a method for securing resistance to hydrogen embrittlement, together with ultra-high strength characteristics of the hot press formed member.

Hereinafter, the present disclosure will be described in detail.

According to an aspect of the present disclosure, a steel sheet for hot press forming including: a base steel sheet and an aluminum-based plating layer formed on at least one surface of the base steel sheet.

The inventors of the present disclosure conducted an in-depth study on a method for improving resistance to hydrogen embrittlement together with ultra-high strength of a hot press formed member, in manufacturing a hot press formed member using a steel sheet for hot press forming. As a result, it was found that a hot press formed member having excellent resistance to hydrogen embrittlement may be provided by using a carbon steel containing a certain amount of carbon (C) as a base steel sheet forming the steel sheet for hot press forming and partially decarburizing a surface of the carbon steel.

Thus, in an example embodiment of the present disclosure, the base steel sheet may be a carbon steel containing 0.30 to 0.50% by weight of carbon (C). Meanwhile, in using the carbon steel containing a certain amount of carbon as the base steel sheet, the carbon steel may further contain components other than C. Though the components are not specifically defined, as a non-limiting example, the base steel sheet may further include, by weight: 0.05 to 1.00% of silicon (Si), 0.4~3.0% of manganese (Mn), 0.001 to 0.050% of phosphorus (P), 0.0001 to 0.0200% of sulfur (S), 0.01 to 0.10% of aluminum (Al), 0.001 to 0.020% of nitrogen (N), 0.0001 to 0.0100% of boron (B), 0.01 to 0.50% of chromium (Cr), 0.010 to 0.050% of titanium (Ti), and a total content of 0.10 to 0.50% of one or more of molybdenum (Mo), niobium (Nb), and vanadium (V).

Hereinafter, the alloy composition of the base steel sheet according to an example embodiment of the present disclosure, as an example, a carbon steel will be described, and unless otherwise particularly stated, the content unit of each alloy component is % by weight.

### Carbon (C): 0.30 to 0.50%

Carbon (C) is an element which greatly increases strength of a hot press formed member and increases hardenability and needs to be essentially added at an appropriate content for strength adjustment.

In an example embodiment of the present disclosure, when the content of C is less than 0.30%, it is difficult to secure a target level of strength, in particular, a tensile strength of 1.8 GPa or more in the hot press formed member. However, when the content is more than 0.50%, brittleness may be caused by an excessive increase of steel strength, weldability may be deteriorated.

Therefore, in an example embodiment of the present disclosure, C may be included in an amount of 0.30 to 0.50%. According to another example embodiment of the present disclosure, C may be included in an amount of 0.32% or more or 0.34% or more. According to another example embodiment, C may be included in an amount of 0.48% or less or 0.46% or less.

### Silicon (Si): 0.05 to 1.00%

Silicon (Si), which is an element added for deoxidation in a steelmaking process, has a solid solution strengthening effect, and an element suppressing production of a carbide, is effective for obtaining structure uniformity inside a steel. In an example embodiment of the present disclosure, Si is an element which contributes to an increase in strength of the hot press formed member and also, is effective for material uniformity.

In an example embodiment of the present disclosure, when the content of Si is less than 0.05%, the effects described above may not be sufficiently obtained, and a process costs for controlling the content of Si to be low may be excessive. However, when the content is more than 1.00%, a Si oxide is excessively produced on the surface during an annealing process of a steel sheet, so that platability is greatly deteriorated in a subsequent plating process. Thus, it becomes difficult to secure surface quality of the plated steel sheet.

Therefore, in an example embodiment of the present disclosure, Si may be included in an amount of 0.05 to 1.00%. According to another example embodiment of the present disclosure, Si may be included in an amount of 0.07% or more or 0.10% or more. According to another example embodiment, Si may be included in an amount of 0.95% or less or 0.90% or less.

### Manganese (Mn): 0.4 to 3.0%

Since Manganese (Mn) is an element effective for securing target strength due to its solid solution strengthening effect and improves hardenability of steel, it may be added in order to suppress formation of ferrite during hot press forming.

In an example embodiment of the present disclosure, when the content of Mn is less than 0.4%, the hardenability of steel may not be sufficiently secured. In addition, other expensive alloy elements need to be added in order to satisfy the insufficient hardenability, and in this case, manufacturing costs are greatly increased. However, when the content is more than 3.0%, a band-like structure arranged in a microstructural rolling direction is deepened to cause non-uniformity of an internal structure, thereby deteriorating physical properties such as steel bendability.

Therefore, in an example embodiment of the present disclosure, Mn may be included in an amount of 0.4 to 3.0%. According to another example embodiment of the present disclosure, Mn may be included in an amount of 0.5% or more or 0.6% or more. According to another example embodiment, Mn may be included in an amount of 2.9% or less or 2.8% or less.

### Phosphorus (P): 0.001 to 0.050%

Phosphorus (P) is an element which is unavoidably added during a steel manufacturing process.

In an example embodiment of the present disclosure, when the content of P is more than 0.050%, weldability of a hot press formed member may be deteriorated, and the physical properties of a material may be deteriorated due to boundary segregation at a high temperature. Meanwhile, in order to control the content of P to the extreme, in an example embodiment of the present disclosure, the lower limit may be limited to 0.001%, considering the incurrence of excessive manufacturing costs and an unavoidably added level.

Therefore, in an example embodiment of the present disclosure, P may be limited to 0.001 to 0.050%.

### Sulfur (S): 0.0001 to 0.0200%

Sulfur (S) is an element which is unavoidably introduced during a steel manufacturing process, and since it is an element which impairs ductility, impact toughness, weldability, or the like of steel, it is favorable to control it as low as possible.

In an example embodiment of the present disclosure, when the content of S is more than 0.0200%, the problems described above may be caused, and thus, the upper limit may be limited to 0.0200%. Meanwhile, in order to control the content of S to the extreme, in an example embodiment of the present disclosure, the lower limit may be limited to 0.0001%, considering the incurrence of excessive manufacturing costs and an unavoidably added level.

Therefore, in an example embodiment of the present disclosure, S may be limited to 0.0001 to 0.0200%.

### Aluminum (Al): 0.01 to 0.10%

Aluminum (Al) may be added for deoxidation during a steelmaking process together with Si, and thus, increase cleanliness of steel.

In an example embodiment of the present disclosure, when the content of Al is less than 0.01%, the effects described above may not be sufficiently obtained, and also, the manufacturing costs may be excessively increased in order to control the Al content to be low. Thus, the content may be limited to 0.01% or more. However, when the content is more than 0.10%, an AlN precipitate is excessively formed during a continuous casting process, and thus, the high temperature ductility of steel is deteriorated, and slab cracks are caused.

Therefore, in an example embodiment of the present disclosure, Al may be included at 0.01 to 0.10%. According to another example embodiment of the present disclosure, Al may be included at 0.015% or more or 0.020% or more. According to another example embodiment, Al may be included at 0.090% or less or 0.085% or less.

### Nitrogen (N): 0.001 to 0.020%

Nitrogen (N) may be unavoidably added during a steel manufacturing process.

In an example embodiment of the present disclosure, when the content of N is more than 0.020%, it is bonded to Al added for an effect such as deoxidation to form an AlN precipitate, so that slab cracks may easily occur. Meanwhile, in order to control the content of N to the extreme, in an example embodiment of the present disclosure, the lower limit may be limited to 0.001%, considering the incurrence of excessive manufacturing costs and an unavoidably added level.

Therefore, in an example embodiment of the present disclosure, N may be limited to 0.001 to 0.020%.

### Boron (B): 0.0001 to 0.0100%

Boron (B) is an element which may improve hardenability of steel only with a small amount of addition, and is segregated at a crystal grain boundary of prior austenite and effective for preventing brittleness due to boundary segregation of P and/or S added as an impurity.

In an example embodiment of the present disclosure, when the content of B is less than 0.0001%, the effects described above may not be sufficiently obtained. However, when the content is more than 0.0100%, a composite compound such as Fe₂₃CB₆ is formed, thereby causing brittleness of steel during a hot rolling process.

Therefore, in an example embodiment of the present disclosure, B may be included at 0.0001 to 0.0100%. According to another example embodiment of the present disclosure, B may be included at 0.0003% or more or 0.0005% or more. According to another example embodiment, B may be included at 0.0090% or less or 0.0080% or less.

### Chromium (Cr): 0.01 to 0.50%

Chromium (Cr) is an element which improve hardenability of steel, similar to Mn, B, or the like on steel.

In an example embodiment of the present disclosure, when the content of Cr is less than 0.01%, it is difficult to sufficiently improve hardenability of steel, but when the content is more than 0.50%, the effect of improving hardenability is saturated, and steel manufacturing costs may be rather increased.

Therefore, in an example embodiment of the present disclosure, Cr may be included at 0.01 to 0.50%. According to another example embodiment of the present disclosure, Cr may be included at 0.02% or more or 0.03% or more. According to another example embodiment, Cr may be included at 0.48% or less or 0.45% or less.

### Titanium (Ti): 0.010 to 0.050%

Titanium (Ti) is bonded to N added to steel as an impurity to produce a TiN precipitate, and serves a protective role so that B added for securing hardenability of steel is not precipitated as BN.

In an example embodiment of the present disclosure, when the content of Ti is less than 0.010%, it is difficult to expect the effects described above, but when the content is more than 0.050%, the effect described above is saturated, and manufacturing costs may be rather increased. In addition, coarse precipitates may be formed to inhibit steel strength.

Therefore, in an example embodiment of the present disclosure, Ti may be included at 0.010 to 0.050%. According to another example embodiment of the present disclosure, Ti may be included at 0.012% or more or 0.015% or more. According to another example embodiment, Ti may be included at 0.048% or less or 0.045% or less.

Total content of one or more of molybdenum (Mo), niobium (Nb), and vanadium (V): 0.10 to 0.50%

Molybdenum (Mo), niobium (Nb), and vanadium (V) are elements which are effective for refining crystal grains by forming precipitates such as carbides and/or carbonitrides. Since the precipitates formed by the elements act as a trapping site of hydrogen in steel, it is effective for improving resistance to hydrogen embrittlement of steel.

In an example embodiment of the present disclosure, at least one of Mo, Nb, and V may be included, and the effects described above may be expected by adding them in an amount of 0.10% or more based on the total content of them. However, when the total content of them is more than 0.50%, it is difficult to expect a resistance to hydrogen embrittlement improvement effect as well as a crystal grain refinement effect, by forming coarse precipitates rather than securing the number of formed precipitates (number density).

Meanwhile, in an Example embodiment of the present disclosure, the base steel sheet may further include additional components in addition to the alloy composition described above. As a non-limiting example, one or more selected from the group consisting of 0.01% or less of calcium (Ca), 1.0% or less of tungsten (W), 0.3% or less of rare earth metals (REM), and 0.05 to 1.000% of one or more of Group 1 elements may be further included. Since these elements may be all optionally added, 0% may be included as their content.

### Calcium (Ca): 0.01% or less

Calcium (Ca) serves to remove P and S to a certain level or less during a steelmaking process, the cleanliness of steel may be improved therefrom, and thus, calcium may be added for the effect thereof. However, when the content is more than 0.01%, the steel manufacturing costs are greatly increased, and thus, calcium (Ca) may be included at 0.01% or less when added.

### Tungsten (W): 1.0% or less

Tungsten (W) serves to form a carbide in steel to refine a crystal grain boundary. In an example embodiment of the present disclosure, W may be included in order to improve resistance to hydrogen embrittlement of steel by refining a crystal grain boundary. However, when the content is more than 1.0%, the steel manufacturing costs are greatly increased, and thus, W may be included in an amount of 1.0% or less when added.

### Rare earth metals (REM): 0.3% or less

Rare earth metals (REM) are elements which may be contained in steel in a steelmaking process, and tend to be segregated in a crystal grain boundary. When the content of REM is more than 0.3%, the resistance to hydrogen embrittlement of steel may be deteriorated by excessive segregation of REM at the crystal grain boundary, and thus, REM may be included in an amount of 0.3% or less when added. Usually, rare earth metals (REM) refer to a total of 17 metal elements such as scandium (Sc), yttrium (Y), lanthanum (La), cerium (Ce) of the like.

### One or more Group 1 elements: 0.005 to 1.000%

The base steel sheet according to an example embodiment of the present disclosure may further include one or more Group 1 elements, specifically, one or more elements selected from the group consisting of antimony (Sb), tin (Sn), arsenic (As), bismuth (Bi), copper (Cu), and nickel (Ni). Among them, Sb, Sn, and Bi may be added for improving plating performance, for example, plating wettability, plating adhesion, or the like, and Cu and Ni may be added for improving corrosion resistance of steel. In particular, when Ni is added together when adding Cu, an effect of preventing red shortness which may be caused by Cu added may be obtained. When these elements are added, they may be included in an amount of 0.005 to 1.000%, respectively, and even when two or more are added, they may be added within a range of 0.005 to 1.000%.

In an example embodiment of the present disclosure, a remaining component other than the components described above is iron (Fe). However, since in a common manufacturing process, unintended impurities may be unavoidably incorporated from raw materials or the surrounding environment, the component may not be excluded. Since these impurities are known to any person skilled in the common manufacturing process, the entire contents thereof are not particularly mentioned in the present specification.

A plating layer may be included on at least one surface of the base steel sheet according to an example embodiment, and the plating layer at this time may be an aluminum-based plating layer.

In an example embodiment of the present disclosure, the aluminum-based plating layer formed on at least one surface of the base steel sheet is a plating layer containing aluminum (Al) as a main element, and as an example, the aluminum-based plating layer may include, by weight: 6.0 to 12.0% of silicon (Si), 1.0 to 9.0% of iron (Fe), a remainder of aluminum (Al), and unavoidable impurities. Though it will be described in detail later, the aluminum-based plating layer may be formed by dipping the base steel sheet into an aluminum-based hot dip plating bath, and it is well known that the composition of the aluminum-based plating layer is determined by the composition in the aluminum-based hot dip plating bath.

The Silicon (Si) serves to lower the melting point of the plating bath, and also prevent excessive alloying during heating to a high temperature for hot forming. Thus, Si may be included in an amount of 6.0% or more. However, when the content is more than 12.0%, there is a concern that the melting point of the plating bath may rapidly rise, and in this case, an amount of ash produced in the plating bath may rapidly increase. In addition, flowability of the plating bath is decreased, and there is a difficulty in forming a uniform plating layer.

Since the iron (Fe) may exist as an impurity in the plating bath, it may be partially introduced to the plating layer in a plating process. In addition, since Fe present in the base steel sheet is eluted into the plating layer in the plating process, it may be included in the aluminum-based plating layer. Thus, Fe may be included in an amount of 1.0% or more and 9.0% or less in the aluminum-based plating layer. Meanwhile, in order to control the content of Fe in the plating layer to less than 1.0%, Fe eluted from the base steel sheet should be diluted, and in this case, the manufacturing costs are excessively increased. In addition, when the content of Fe in the aluminum-based plating layer is more than 9.0%, an Al-Fe alloy phase is excessively formed, so that plating quality may be deteriorated.

According to an example of the present disclosure, the aluminum-based plating layer may further include common elements included in the plating layer, in addition to the components described above. An example of the elements may include one or two or more selected from Mg, Mn, Cr, Cu, Mo, Ni, Sb, Sn, Ti, Ca, and Sr.

In an example embodiment of the present disclosure, the aluminum-based plating layer may have a thickness of 5.0 to 40.0 µm. When the thickness of the aluminum-based plating layer is less than 5.0 µm, corrosion resistance of the member after hot press forming may be deteriorated. However, when the thickness of the plating layer is more than 40.0 µm, corrosion resistance improvement is favorable, but it is difficult to completely alloy the plating layer within a predetermined heat treatment time to deteriorate productivity, and a possibility of Al seizing on a roll in a heating furnace is increased.

As mentioned above, in order to secure both the ultra-high strength and the resistance to hydrogen embrittlement of the hot press formed member simultaneously, according to an example embodiment of the present disclosure, the surface of the steel sheet for hot press forming for obtaining the hot press formed member may be partially decarburized.

Specifically, according to an example embodiment of the present disclosure, a surface layer part defined as being within 30 µm in the thickness direction of the base steel sheet from an interface between the base steel sheet and the plating layer may satisfy a ratio (Cₘᵢₙ/C₀) between a carbon minimum content (Cₘᵢₙ) and a carbon content (C₀) of the base steel sheet of 0.5 to 0.8.

That is, the base steel sheet forming the steel sheet for hot press forming may be, as an example, a carbon steel containing a certain amount of carbon, and an area having a lower C content, that is, a decarburization area may exist at a certain depth in the thickness direction of the base steel sheet in the interface between the base steel sheet and the plating layer. As such, the steel sheet for hot press forming according to an example embodiment of the present disclosure may prevent hydrogen-induced brittleness in a later hot press forming process, by having the area having a lower C content in the surface layer part present in the thickness direction of the base steel sheet in the interface between the base steel sheet and the plating layer.

In an example embodiment of the present disclosure, when the ratio (Cₘᵢₙ/C₀) of the minimum C content in the surface layer part to the C content in the base steel sheet is less than 0.5, the surface layer of the base steel sheet is excessively decarburized, thereby decreasing the strength of the member after hot press forming. In addition, fatigue characteristics may be deteriorated due to the lowered hardness of the surface layer part. However, when the value is more than 0.8, the surface layer part is not decarburized to an intended level, and thus, the resistance to hydrogen embrittlement of the hot press formed member may not be secured. Herein, though the surface layer part of the base steel sheet is described based on the minimum carbon content, the value does not exceed 1.0, even based on the maximum carbon content.

Meanwhile, an area having a lower C content in the surface layer part of the base steel sheet, that is, a decarburization area may exist mainly near the interface which is an area in contact with the plating layer.

When the hot press forming is performed using the plated steel sheet, alloying occurs in the interface between the base steel sheet and the plating layer in a heating process. When alloying occurs as such, hydrogen permeates the steel from outside (for example, an atmosphere in a furnace where hot press forming is performed), and carbon present near the surface of the base steel sheet is not diffused into the plating layer, but diffused only into the base steel sheet directly beneath the plating layer due to the low carbon solid solubility of the plating layer. Herein, when an alloying rate is higher than a diffusion rate of carbon into the center part of the base steel sheet (mother material), carbon is concentrated on the surface of the base steel sheet, thereby producing a carbon-concentrated area in the thickness direction of the base steel sheet based on the interface between the plating layer and the base steel sheet.

In general, the steel sheet for hot press forming for obtaining the hot press formed member is a plated steel sheet which is not decarburized on the surface, that is, has an identical/similar average carbon amount for the entire thickness of the base steel sheet. When the plated steel sheet is heated at a high temperature and then formed (pressed) in a hot condition by a mold, alloying occurs, and in this process, carbon is concentrated, so that more vulnerable martensite is produced in an area having a locally increased carbon content. This area becomes more brittle due to hydrogen permeating into the steel in a hot press forming process. Thus, the physical properties and the resistance to hydrogen embrittlement of the manufactured hot press formed member may be adversely affected, and as a result, its use as a product may not be allowed.

The inventors of the present disclosure conducted an in-depth study on the method for fundamentally solving the problems described above. As a result, a steel sheet for hot press forming having an area in which the carbon content is lower for a certain thickness in the thickness direction of the base steel sheet from the interface between the base steel sheet and the plating layer, and thus, has lower strength, that is to say, a decarburization area having a softer characteristic than the inside of the base steel sheet, has been provided. As such, in hot press forming the steel sheet for hot press forming having an area in which a carbon content is lowered in the surface of the base steel sheet, alloying occurs in the interface between the base steel sheet and the plating layer during heating at a high temperature, and simultaneously hydrogen permeates from the outside, and thus, a hydrogen-induced fracture limit stress is increased due to low strength of the area having a lowered carbon amount after cooling, along with subsequent forming, thereby increasing the resistance to hydrogen embrittlement of the hot press formed member.

In an example embodiment of the present disclosure, an internal oxide may be included to a depth of 0.5 to 5.0 µm in the thickness direction of the base steel sheet from the interface between the base steel sheet and the aluminum-based plating layer.

That is, as described above, the internal oxide may exist at a certain depth in the surface side of the surface layer part corresponding to a certain thickness in the thickness direction of the base steel sheet from the interface between the base steel sheet and the plating layer. Herein, since the internal oxide may be formed in a grain boundary, it may be referred to as a grain boundary internal oxide. Since the grain boundary internal oxide may act as a strong trap site which traps hydrogen introduced into steel, it may contribute to improvement of the resistance to hydrogen embrittlement of the hot press formed member.

In an example embodiment of the present disclosure, when the depth of the grain boundary internal oxide present in the thickness direction of the base steel sheet from the interface between the base steel sheet and the plating layer is less than 0.5 µm, a hydrogen trap site may be sufficiently provided. However, when the depth is more than 5.0 µm, the internal oxide is formed at an excessive depth, and may act as a stress concentration site during bending deformation to rather deteriorate the resistance to hydrogen embrittlement.

In an example embodiment of the present disclosure, the type of internal oxide is not particularly defined. However, since the internal oxide is formed in the base steel sheet, the type may be determined depending on the element in the base steel sheet. As an example, among the elements in the base steel sheet, elements having good affinity for oxygen preferentially will form an oxide, in which the oxide may be an Si oxide, a Mn oxide, or the like.

In an example embodiment of the present disclosure, the base steel sheet may include a certain carbide. The carbide may exist in the surface layer part of the base steel sheet as well as the inside of the base steel sheet. Thus, as an example, the result of measuring the number of carbides at a t/4 point in the thickness direction of the base steel sheet may be representatively shown.

In an example embodiment of the present disclosure, the base steel sheet may include one or more carbides of V-based carbides, Mo-based carbides, and V-Mo composite carbides at 10⁵/mm² or more. In general, when V and Mo are added in a certain amount to steel, they are elements favorable for forming precipitates, and crystal grain refinement may be promoted by the precipitates. Also, in an example embodiment of the present disclosure, there is significance in using the precipitate (carbide) by V and Mo as a site for hydrogen trapping. That is, hydrogen may be introduced into a steel sheet (base steel sheet) in a hot press forming process of the steel sheet for hot press forming, and at this time, the resistance to hydrogen embrittlement of the member may be improved by trapping hydrogen introduced to the carbide which is mainly present inside the steel sheet.

In an example embodiment of the present disclosure, when the number of carbides is less than 10⁵/mm², a hydrogen trapping site may not be sufficiently provided, and thus, it becomes difficult to improve the resistance to hydrogen embrittlement of the member after hot press forming. Meanwhile, the more the carbides are, the more favorable it is for hydrogen trapping, and thus, the upper limit is not particularly limited. However, the number of carbides may be appropriately formed depending on the content of the elements forming the carbide in the base steel sheet.

In an example embodiment of the present disclosure, in including the carbides in the base steel sheet as described above, the average size of the carbides may be 1 to 100 nm. As such, the resistance to hydrogen embrittlement of the member after hot press forming may be further improved, by fine carbides present in a large amount. When the average size of the carbides is less than 1 nm, an effect of crystal grain refinement or resistance to hydrogen embrittlement improvement is saturated, while a cooling rate during a manufacturing process should be excessively increased in order to control the carbide to a finer size. In this case, it may be difficult to manufacture an intended steel sheet. However, when the size is more than 100 nm, coarse carbides mainly exist, so that the hydrogen trapping effect may not be sufficiently obtained.

Hereinafter, a method for manufacturing a steel sheet for hot press forming according to another aspect of the present disclosure will be described in detail. The following manufacturing method corresponds to an example for manufacturing a steel sheet for hot press forming according to an example embodiment of the present disclosure.

According to an example embodiment of the present disclosure, the manufacture may be performed through processes of [heating - hot rolling - winding - annealing - cooling - plating - cooling] of the prepared steel slab, and each process step will be described in detail below.

### [Steel slab heating]

After preparing a steel slab according to an example embodiment of the present disclosure, the steel slab may be heated. The heating process of the steel slab is a process for performing a hot rolling process described later well and sufficiently obtaining the physical properties of the steel sheet to be desired. As an example, the steel slab may have the same alloy composition as the steel sheet according to an example embodiment of the present disclosure, and the description of each alloy element is replaced with the above description.

In an example embodiment of the present disclosure, the process of heating the steel slab may be based on the usual conditions, and as an example, it may be performed in a temperature range of 1050 to 1300°C. When the heating temperature is lower than 1050°C, a slab structure may not be sufficiently homogenized. However, when the temperature is higher than 1300°C, an oxide layer is excessively formed on the surface, and also, decarburization excessively occurs in the slab surface layer part during heating, so that the steel sheet for hot press forming to be targeted in the present disclosure may not be obtained.

### [Hot rolling]

The heated steel slab may be hot rolled to obtain a hot-rolled steel sheet.

In an example embodiment of the present disclosure, finish hot rolling is performed in a temperature range of 800 to 950°C during hot rolling, thereby manufacturing a hot-rolled steel sheet. In an example embodiment of the present disclosure, when the finish hot rolling process is performed at a temperature lower than 800°C, a mixed grain structure occurs in the surface layer part by performing 2-phase region rolling of ferrite and austenite, and it becomes difficult to control a sheet shape. However, when the temperature is higher than 950°C, crystal grains become coarse.

### [Winding]

The manufactured hot-rolled steel sheet may be wound, and a hot-rolled coil may be obtained therefrom.

In an example embodiment of the present disclosure, a winding process may be performed in a temperature range of 500 to 700°C. When the temperature is lower than 500°C during the winding, an internal oxide for providing it for a trap site of hydrogen may not be formed. In addition, a martensite phase is formed in whole or in part of the microstructure of the hot-rolled steel sheet, so that it may be difficult to control a sheet shape, and when cold rolling is performed as a subsequent process, cold rollability may be deteriorated due to increased strength of the hot-rolled steel sheet. However, when the winding temperature is higher than 700°C, the surface layer decarburization of the base steel sheet in the plated steel sheet may excessively occur, and internal oxide occurs even in too deep an area, thereby lowering strength of the member after the hot press forming and rather deteriorating hydrogen embrittlement.

### [Annealing]

The wound hot-rolled steel sheet may be annealed.

In an example embodiment of the present disclosure, the annealing treatment of the steel sheet may be performed in an atmosphere of a dew point of -10 to +20°C after heating the steel sheet in a temperature range of 740 to 860°C.

When the heating temperature for the annealing treatment is lower than 740°C, recrystallization of the structure does not sufficiently occur, so that a sheet shape may be poor. In addition, the strength of the plated steel sheet is excessively increased after a subsequent plating process, so that mold wear during a blanking process may be caused. However, when the temperature is higher than 860°C, a surface oxide of Si, Mn, or the like is formed during an annealing process, so that a plating surface may be deteriorated.

Decarburization may be induced on the surface of the steel sheet during the annealing process, and in order to sufficiently cause the decarburization, controlling the atmosphere after heating is important, and in an example embodiment of the present disclosure, it may be achieved by controlling a dew point temperature of the atmosphere. In an example embodiment of the present disclosure, when the dew point of the atmosphere is lower than -10°C, decarburization on the surface of the steel sheet does not sufficiently occur, and when the temperature is higher than +20°C, the surface is excessively decarburized, thereby lowering the strength of the member after hot press forming. In addition, a fatigue characteristic may be deteriorated due to the excessively low carbon in the surface layer part of the base steel sheet.

The heated steel sheet may be maintained in a state in which the dew point of the atmosphere is controlled according to an example embodiment of the present disclosure, and as an example, it may be performed for 50 to 150 seconds. When the maintenance time is less than 50 seconds, the surface layer decarburization does not sufficiently occur, but when the time is more than 150 seconds, the surface layer decarburization may excessively occur.

In an example embodiment of the present disclosure, the annealing treatment may be performed in a reducing atmosphere. As a non-limiting example, the annealing treatment may use a mixed gas of hydrogen and nitrogen, and may be performed with an atmosphere gas which is controlled with 5 to 15 vol% of H₂-a remainder of N₂ with unavoidable impurities. When the content of H₂ in the atmosphere gas is less than 5 vol%, it may be difficult to control the atmosphere to be reductive, but when the content is more than 15 vol%, there is a risk of explosion or the like by hydrogen.

Meanwhile, in an example embodiment of the present disclosure, it has been described that the annealing treatment process may be performed on the hot-rolled steel sheet, and the annealed hot-rolled steel sheet as such may be subjected to a subsequent plating process. In addition to this, if necessary, the hot-rolled steel sheet may be cold rolled to obtain a cold-rolled steel sheet, which may be subjected to annealing, a plating process, or the like. The cold rolling may be performed for the thickness control of the steel sheet and shape correction, and a cold reduction rate is not particularly defined. As an example, when it is applied to a steel sheet for automobiles, it may be performed at a reduction rate of 20 to 80%. At the cold reduction rate is less than 20%, it is difficult to secure a uniform structure in a later annealing process with a low recrystallization driving force. However, when the cold reduction rate is more than 80%, the shape of the cold-rolled steel sheet becomes poor, and a load applied to the roll may increase.

### [Cooling (first carbon diffusion)]

The annealed hot-rolled steel sheet or cold-rolled steel sheet may be cooled. Hereinafter, the hot-rolled steel sheet and the cold-rolled steel sheet will be collectively referred to as a steel sheet.

Since the steel sheet annealed in the conditions according to an example embodiment of the present disclosure of the present disclosure is in a state in which the surface is partially decarburized, an area or region having the carbon (C) content is close to nearly 0 exists in the surface layer part of the steel sheet. As such, in order to provide a certain amount of carbon for the surface layer part having the decarburization area or decarburization region, in an example embodiment of the present disclosure, the annealed steel sheet is cooled, and as an example, the cooling may be performed at a cooling rate of 0.3 to 2.0°C/s in an atmosphere of a dew point of -30 to -60°C. The cooling process at this time is referred to as a first carbon diffusion step.

In an example embodiment of the present disclosure, in order to control the dew point of the atmosphere to lower than -60°C when cooling the annealed steel sheet, process costs are excessively increased. However, when the dew point is higher than -30°C, decarburization may further occur on the surface of the annealed steel sheet. In addition, when the cooling rate during cooling is less than 0.3°C/s, a diffused carbon amount becomes excessive, and the decarburization area or decarburization region in the surface layer part may have a C content at a similar level to that before decarburization. However, the cooling rate is more than 2.0°C/s, there is not sufficient time for carbon to diffuse, and the decarburization area or decarburization region having a target carbon amount in the surface layer part may not be secured.

A certain amount of carbon may be diffused from the inside of the annealed steel sheet into the surface layer part having the decarburization area or decarburization region by the cooling process as such.

### [Plating]

The steel sheet which is cooling treated (first carbon diffusion) according to the above may be plated, and a plated steel sheet may be obtained therefrom.

In an example embodiment of the present disclosure, the plating process of the steel sheet may be hot dip plating using a hot dip plating bath, and as an example, a hot dip plating bath (melt aluminum-based plating bath) having aluminum as the main component may be used. By dipping the steel sheet into the hot dip plating bath, plating may be performed, and an aluminum-based plated steel sheet may be obtained thereby.

In an example embodiment of the present disclosure, the hot dip plating may be performed in a temperature range of 600 to 700°C, and the temperature range refers to a temperature of the plating bath when the steel sheet is dipped during hot dip plating. When the temperature in the plating is lower than 600°C, it is difficult to secure flowability of the plating bath, and thus, it is difficult to precisely control a plating amount deposited on the steel sheet surface. However, when the temperature is higher than 700°C, Fe is excessively eluted from the steel sheet dipped into the plating bath, so that a large amount of an Al-Fe compound is deposited on the surface to deteriorate plating quality.

In an example embodiment of the present disclosure, the hot dip aluminum-based plating bath is a plating bath including aluminum (Al) as a main component, and as an example, silicon (Si) may be included in an amount of 6.0 to 12.0% by weight in the plating bath. In addition, iron (Fe) may be partially contained in the plating bath, and the iron (Fe) may be mainly eluted from the steel sheet dipped in the plating bath and exist, and the content may be at a level of 1.0 to 9.0%. In addition, the component composition in the plating bath may be replaced with the above description. Meanwhile, the hot dip aluminum-based plating bath according to an example embodiment of the present disclosure may further include elements other than the components described above, and as a non-limiting example, one or two or more of Mg, Mn, Cr, Cu, Mo, Ni, Sb, Sn, Ti, Ca, Sr, Zn, or the like may be included.

In an example embodiment of the present disclosure, in performing hot dip plating, it may be performed in a plating amount of 30 to 130 g/m² based on one surface. When the plating amount is less than 30 g/m² based on one surface during the plating, the plating layer is not sufficiently formed, thereby not securing corrosion resistance of the member after the hot press forming. However, when the plating amount is more than 130 g/m², based on one surface, the plating deposition amount becomes excessive, so that manufacturing costs are increased, and it is difficult to form a uniform plating layer in the width and length directions of the steel sheet.

### [Cooling (second carbon diffusion)]

A process of cooling the plated steel sheet obtained above, as an example, an aluminum-based plated steel sheet may be performed.

In an example embodiment of the present disclosure, the plated steel sheet manufactured by the plating process is a plating layer having a certain thickness formed on the surface of the base steel sheet, and a cooling process may be performed in order to diffuse carbon (C) from the inside to the surface of the base steel sheet. That is, the base steel sheet has a surface layer part having a decarburization area or decarburization region having a certain content of C on the surface by undergoing a series of annealing and cooling processes before the plating process, and after the plating layer is formed on the surface layer part, carbon diffusion from the inside of the base steel sheet to the decarburization region may be further induced. Thus, the present cooling step may be referred to as a second carbon diffusion step.

In an example embodiment of the present disclosure, cooling for additional carbon diffusion may be performed down to 400°C at a cooling rate of 4 to 12°C/s. When the cooling rate is less than 4°C/s during the cooling, it takes excessive time to diffuse carbon to a target level, which may deteriorate economic feasibility, and also, a carbon content at a target level may not be secured in the surface layer part of the base steel sheet. However, when the cooling rate is more than 12°C/s, cooling may be completed without sufficiently diffusing carbon, and in this case also, a carbon content at a target level may not be secured.

Meanwhile, below 400°C, a carbon diffusion rate is relatively slower. Thus, in the temperature range of lower than 400°C, there is no need to particularly limit the cooling rate for further diffusion of carbon. Thus, in an example embodiment of the present disclosure, in order to increase productivity in the temperature range of lower than 400°C, cooling may be rapidly performed at more than 12°C/s, or natural cooling may be performed.

The steel sheet for hot press forming is obtained by completing the cooling process described above.

As such, when a series of processes according to an example embodiment of the present disclosure is performed, the manufactured aluminum-based plated steel sheet, that is, the steel sheet for hot press forming may have a decarburization area or region having a certain content of carbon in the thickness direction of the base steel sheet based on the interface between the base steel sheet and the plating layer. Herein, the decarburization area or region may exist in the surface layer part, and also, in the surface side of the surface layer part, an internal oxide may exist at a certain depth. The internal oxide at this time is mainly formed in the grain boundary, and the internal oxide may improve resistance to hydrogen embrittlement of the member obtained by hot press forming, by acting as a site of hydrogen trapping in a subsequent hot press forming process. Besides, a certain amount of carbides may exist inside the base steel sheet of the aluminum-based plated steel sheet, and the carbides also further promote the improvement of the resistance to hydrogen embrittlement of the hot press formed member, by acting as a hydrogen trap site.

Hereinafter, the hot press formed member according to another aspect of the present disclosure and a method for manufacturing the same will be described.

In an example embodiment of the present disclosure, the hot press formed member may be obtained by hot press forming the steel sheet for hot press forming, and the steel sheet for hot press forming at this time may be according to an example embodiment of the present disclosure.

The steel sheet for hot press forming according to an example embodiment of the present disclosure may include a base steel sheet and an aluminum-based plating layer formed on at least one surface of the base steel sheet, and the alloy composition of the base steel sheet and the composition of the aluminum-based plating layer may be replaced with the above description.

In an example embodiment of the present disclosure, the hot press formed member may satisfy a ratio (Cₘₐₓ/C₀) between the carbon maximum content (Cₘₐₓ) in an area within 30 µm in the thickness direction of the base steel sheet from the interface between the base steel sheet and the plating layer and the carbon content (C₀) in the base steel sheet of 0.8 to 1.1.

The steel sheet for hot press forming according to an example embodiment of the present disclosure has a decarburization area having a lower carbon content (decarburization area) than the carbon content in the base steel sheet, from the interface between the base steel sheet and the plating layer to a certain area in the thickness direction of the base steel sheet, and it was revealed that this exists in the surface layer part of the base steel sheet. When the steel sheet for hot press forming is heated at a high temperature for hot press forming, alloying in the interface between the base steel sheet and the plating layer occurs, so that a carbon concentration in the surface layer part is relatively increased by diffusion of carbon present in the surface layer part of the base steel sheet into the interface region. As an example, the hot press formed member may have the Cₘₐₓ/C₀ value of 0.8 to 1.1, based on the maximum content of carbon (Cₘₐₓ) present in the surface layer part mentioned above. In the hot press formed member, when the Cₘₐₓ/C₀ value of the surface layer part of the base steel sheet is less than 0.8, a hot press formed member having ultra-high strength may not be provided. In particular, as the surface layer hardness of the base steel sheet is lowered, the strength of the member is lowered, and also, the durability performance of the member affected by the surface hardness is deteriorated. However, when the value is more than 1.1, the effect of decarburizing the surface of the base steel sheet through a series of processes may not be obtained, and as a result, it is difficult to secure resistance to hydrogen embrittlement of the hot press formed member.

Meanwhile, in describing the surface layer part of the base steel sheet of the hot press formed member, it should be noted that it is distinguished from the surface layer part of the base steel sheet of the steel sheet for hot press forming described above. Though the range of the distinguished area is similar, the surface layer part of the base steel sheet in the hot press formed member undergoes alloying in the interface of the base steel sheet and the plating layer in a high temperature heating process, so that the interface between the plating layer and the base steel sheet descends in the direction of the base steel sheet (depth direction). Thus, the interface point between the base steel sheet and the plating layer referring to the surface layer part of the base steel sheet in the hot press formed member is different from the interface point of the steel sheet for hot press forming.

In the hot press formed member obtained by hot press forming the steel sheet for hot press forming according to an example embodiment of the present disclosure, the base steel sheet may include one or more carbides of V-based carbides, Mo-based carbides, and V-Mo composite carbides at 10⁵/mm² or more. Since the carbide present in the base steel sheet of the steel sheet for hot press forming exists also in the hot press formed member as it is, a trapping effect of hydrogen permeating in the hot press forming process may be obtained, thereby improving the resistance to hydrogen embrittlement of the hot press formed member. In addition, the carbide may have an average size of 1 to 100 nm. The description of the number and size of the carbides may be replaced with the above description.

In an example embodiment of the present disclosure, the base steel sheet of the hot press formed member may have a hard structure by performing forming after a high-temperature heat treatment. As an example, the base steel sheet may have a microstructure having an area fraction of 90% or more by combining martensite and bainite phases, and may include pearlite, ferrite, or the like as other structures. However, the present disclosure is not limited thereto. Thus, the hot press formed member according to an example embodiment of the present disclosure may have ultra-high strength, and as an example, may have a tensile strength of 1800 MPa or more.

In addition to this, the hot press formed member according to an example embodiment of the present disclosure may have excellent resistance to hydrogen embrittlement, and this may be confirmed from the results of hydrogen embrittlement evaluation of the hot press formed member.

Meanwhile, the method for manufacturing a hot press formed member according to an example embodiment of the present disclosure is not particularly limited, and as well-known in the art, the hot press formed member may be manufactured by heating a steel sheet for hot press forming to a temperature at or higher than an austenitizing temperature, maintaining the temperature, and then quenching and forming (pressing) at the same time.

However, as an example of the present disclosure, the steel sheet for hot press forming according to an example embodiment of the present disclosure may be used to obtain a blank, and the blank may be heated to a temperature range of 860 to 970°C and then maintained for 3 to 15 minutes. While the blank which is heated and maintained as such is formed (pressed) in a hot state, cooling at or above a critical cooling rate may be performed to manufacture an intended hot press formed member. As a non-limiting example, the cooling may be performed at a cooling rate of 30°C/s or more.

### Mode for Invention

Hereinafter, the present disclosure will be specifically described through the following Examples. However, it should be noted that the following Examples are only for describing the present disclosure in detail by illustration and are not intended to limit the right scope of the present disclosure. The reason is that the right scope of the present disclosure is determined by the matters described in the claims and reasonably inferred therefrom.

### (Examples)

An ingot was dissolved in vacuum to manufacture a slab having a thickness of 40 mm and an alloy composition illustrated in the following Table 1. The manufactured slab was heated to 1200°C, maintained for 1.5 hours, and then finish hot rolled at 900°C, thereby obtaining a hot-rolled steel sheet. Thereafter, each hot-rolled steel sheet was wound in accordance with the conditions shown in Table 2, and then cold rolled at a reduction rate of 50% to obtain a cold-rolled steel sheet. Next, each cold-rolled steel sheet was annealed, cooled, plated, and cooled according to the conditions of Table 2 to manufacture a final steel sheet for hot press forming. At this time, the annealing process was performed in an atmosphere of 5 vol% hydrogen (H₂)-a remainder of nitrogen (N₂), and the plating process was performed in a plating bath including: 9.0% of Si and 2.0% of Fe, a remainder of Al, and unavoidable impurities. At this time, cooling performed before the plating process was set as a first carbon diffusion step, and cooling performed after the plating process was set as a second carbon diffusion step.

**[Table 1]**

| Steel type | Alloy composition (% by weight) | | | | | | | | | | | | | (Mo+V+ Nb) |
|---|---|---|---|---|---|---|---|---|---|---|---|---|---|---|
| | C | Si | Mn | P | S | Al | Cr | Ti | N | B | Mo | V | Nb | |
| A | 0.35 | 0.30 | 1.3 | 0.020 | 0.0030 | 0.03 | 0.20 | 0.03 | 0.004 | 0.0030 | 0.10 | 0.20 | 0 | 0.30 |
| B | 0.38 | 0.30 | 1.3 | 0.020 | 0.0030 | 0.03 | 0.20 | 0.03 | 0.004 | 0.0030 | 0 | 0 | 0 | 0 |
| C | 0.42 | 0.20 | 0.8 | 0.010 | 0.0020 | 0.04 | 0.30 | 0.04 | 0.005 | 0.0030 | 0.03 | 0.06 | 0 | 0.09 |
| D | 0.26 | 0.20 | 1.8 | 0.015 | 0.0030 | 0.03 | 0.20 | 0.03 | 0.005 | 0.0030 | 0.10 | 0.10 | 0 | 0.20 |
| E | 0.35 | 0.30 | 0.3 | 0.020 | 0.0030 | 0.03 | 0.20 | 0.03 | 0.004 | 0.0030 | 0.10 | 0.20 | 0 | 0.30 |
| F | 0.42 | 0.70 | 0.8 | 0.010 | 0.0020 | 0.04 | 0.30 | 0.04 | 0.005 | 0.0030 | 0.15 | 0.30 | 0.03 | 0.48 |
| G | 0.33 | 0.30 | 2.5 | 0.010 | 0.0010 | 0.06 | 0.40 | 0.04 | 0.006 | 0.0025 | 0.10 | 0.20 | 0 | 0.30 |

**[Table 2]**

| Steel type | Winding | Annealing | | | First carbon diffusion | | Plating bath | | | Second carbon diffusion | Classification |
|---|---|---|---|---|---|---|---|---|---|---|---|
| | Temperature (°C) | Temperature (°C) | Dew point temperature (°C) | Time (sec) | Dew point temperature (°C) | Cooling rate (°C/s) | Dipping temperature (°C) | Dipping time (sec) | Deposition amount (g/m²) | Cooling rate (°C/s) | |
| A-1 | 550 | 780 | 10 | 100 | -45 | 1.3 | 670 | 8 | 80 | 8 | Inventive Example 1 |
| A-2 | 650 | 800 | -25 | 120 | -45 | 1.3 | 670 | 8 | 80 | 8 | Comparative Example 1 |
| A-3 | 520 | 820 | 10 | 140 | 10 | 5.0 | 670 | 8 | 80 | 15 | Comparative Example 2 |
| A-4 | 480 | 780 | -45 | 100 | -45 | 1.3 | 670 | 8 | 80 | 8 | Comparative Example 3 |
| A-5 | 750 | 780 | 25 | 100 | -45 | 1.3 | 670 | 8 | 80 | 18 | Comparative Example 4 |
| B | 550 | 780 | -20 | 100 | -45 | 1.0 | 670 | 8 | 80 | 8 | Comparative Example 5 |
| C | 550 | 780 | -15 | 100 | -45 | 1.0 | 670 | 8 | 80 | 8 | Comparative Example 6 |
| D | 620 | 780 | 15 | 100 | -50 | 1.7 | 670 | 8 | 80 | 10 | Comparative Example 7 |
| E | 550 | 780 | 0 | 100 | -35 | 1.7 | 670 | 8 | 80 | 10 | Comparative Example 8 |
| F | 600 | 760 | 15 | 120 | -50 | 1.2 | 665 | 6 | 80 | 7 | Inventive Example 2 |
| G | 640 | 820 | 15 | 70 | -50 | 1.8 | 665 | 9 | 80 | 10 | Inventive Example 3 |

In each steel sheet for hot press forming manufactured according to the above, an area at a depth of 30 µm in the thickness direction of the base steel sheet, based on the interface between the base steel sheet and the plating layer was set as a surface layer part, and the minimum carbon content (Cₘᵢₙ) in the surface layer part and the depth of the internal oxide present in the grain boundary (depth of internal oxide layer) were measured.

Specifically, concentration analysis of carbon or the like was performed using a glow discharge spectrometer (GDS) which allows quantitative analysis of various components in the depth direction of the steel sheet. Usually, in the case of GDS analysis, analysis in the depth direction was performed on a circular area of 2 to 6 mm, and thus, it was difficult to define an accurate interface of plating layer/mother material (base steel sheet) in the concentration profile in the depth direction, but a point at which an Al content was 1.0% was set as the outermost surface of the base steel sheet based on the various optical microscope and SEM analysis results up to that date.

In addition, the depth of the internal oxide present in the surface layer part of the base steel sheet was measured as the internally oxidized depth in each of three observed images, after observing three random points in the width direction of the steel sheet using a scanning electron microscope (SEM) at 3000X magnification. Thereafter, the average value was taken and is shown.

Further, in order to analyze the size and number of carbides present in the base steel sheet, a cross section in a perpendicular direction to the rolling direction at a t/4 position in the thickness direction of the base steel sheet was taken, and a replica specimen for transmission electron microscopy (TEM) was manufactured. Next, 15 random points in each specimen were observed with TEM, and the composition of the carbides was confirmed through EDS analysis. The sizes and number (number density) of the V carbides, Mo carbides, and V-Mo composite carbides confirmed therefrom were calculated, and the total number of carbides is shown in the following Table 3. At this time, the size of each precipitate was measured as an average of a long axis and a short axis, for each observed carbide, and an average size was calculated based thereon.

Meanwhile, a hot press forming process was applied to each steel sheet for hot press forming manufactured above to manufacture a hot press formed member. At this time, a heating temperature for hot press forming was set to 900°C, and after reaching the target temperature, the temperature was maintained for 6 minutes, and transfer to a mold was performed to perform quenching (cooling rate of about 30°C/s or more) with forming to manufacture a hot press formed member. At this time, a transfer time to the mold was applied as 10 seconds, and the mold for forming used a flat plate mold.

Tensile specimens having the ASTM standard were taken from each hot press formed member, and then yield strength and tensile strength were measured using a Universal tensile tester.

In addition, the carbon concentration in the thickness direction in the interface between the base steel sheet and the plating layer of the hot press formed member and the carbides present in the base steel sheet were measured in the same manner as in the method applied to the steel sheet for hot press forming.

Further, in order to evaluate the resistance to hydrogen embrittlement of the hot press formed member, three specimens having a bending stress area by adding stress at a yield strength level with a bending of 4 pt were prepared each. Each specimen was dipped in a 0.1 N HCl solution and then maintained for 120 hours. When fracture occurred in one or more specimens during the maintenance time, hydrogen embrittlement was considered as poor, and the specimen was evaluated as poor.

The measurement values of the steel sheets for hot press forming and the hot press formed member described above are all shown in the following Table 3.

**[Table 3]**

| Classification | Steel sheet for hot press forming | | | Hot formed member | | | | |
|---|---|---|---|---|---|---|---|---|
| | Cₘᵢₙ/C₀ | Number of carbides (10⁵/mm²) | Internal oxide layer (depth, µm) | Yield strength (MPa) | Tensile strength (MPa) | Cₘₐₓ/C₀ | Number of carbides (10⁵/mm²) | Hydrogen embrittlement |
| Inventive Example 1 | 0.67 | 9.3 | 2.0 | 1248 | 1980 | 0.94 | 10.9 | Good |
| Comparative Example 1 | 0.91 | 12.6 | 1.2 | 1310 | 2034 | 1.23 | 14.2 | Poor |
| Comparative Example 2 | 0.18 | 11.4 | 3.7 | 1098 | 1720 | 0.32 | 9.3 | Good |
| Comparative Example 3 | 0.97 | 13.8 | 0.3 | 1287 | 1992 | 1.34 | 16.8 | Poor |
| Comparative Example 4 | 0.45 | 7.7 | 9.4 | 1179 | 1839 | 0.72 | 9.7 | Poor |
| Comparative Example 5 | 0.87 | 0 | 1.6 | 1347 | 2092 | 1.19 | 0 | Poor |
| Comparative Example 6 | 0.82 | 0.4 | 2.2 | 1387 | 2257 | 1.13 | 0.8 | Poor |
| Comparative Example 7 | 0.62 | 5.2 | 2.6 | 1078 | 1598 | 0.85 | 8.1 | Good |
| Comparative Example 8 | 0.68 | 6.1 | 1.9 | 945 | 1403 | 0.90 | 9.7 | Good |
| Inventive Example 2 | 0.53 | 18.3 | 4.6 | 1360 | 2203 | 0.82 | 18.7 | Good |
| Inventive Example 3 | 0.74 | 14.6 | 3.1 | 1212 | 1907 | 1.04 | 14.2 | Good |

As shown in Tables 1 to 3, the steel sheets for hot press forming and the hot press formed members to be intended were able to be obtained by performing a series of processes according to an example embodiment of the present disclosure, using the base steel sheet having the alloy composition according to an example embodiment of the present disclosure.

Specifically, the steel sheet for hot press forming had an area having a relatively lowered carbon content (decarburization area) on the surface of the base steel sheet, and also, the internal oxide exists at a certain depth from the surface of the base steel sheet, while the carbide was formed in the base steel sheet as intended. It was found that by performing hot press forming using the steel sheet for hot press forming, the obtained hot press formed member may secure resistance to hydrogen embrittlement while having ultra-high strength of a tensile strength of 1800 MPa or more.

However, Comparative Examples 1 to 4 in which the alloy composition of the base steel sheet satisfied an example embodiment of the present disclosure, but the manufacturing process did not meet an example embodiment of the present disclosure, did not secure ultra-high strength, or had poor resistance to hydrogen embrittlement. Among them, Comparative Examples 1 to 3 in which the decarburization area was not sufficiently formed on the surface of the base steel sheet had poor resistance to hydrogen embrittlement of the hot press formed member.

Meanwhile, Comparative Example 5 using a steel containing no carbide-forming element showed the results of poor resistance to hydrogen embrittlement due to the absence of the carbide inside the base steel sheet.

In addition, in Comparative Example 6 in which the contents of precipitate-forming elements added to the steel were low, and the dew point temperature during annealing was controlled to be low, the decarburization area was not sufficiently formed on the surface of the base steel sheet, and also, since the carbide was formed in a too small amount in the base steel sheet, it was not difficult to secure strength of the hot press formed member, but resistance to hydrogen embrittlement was poor.

In Comparative Example 7 having the carbon content in the steel lower than the range of an example embodiment of the present disclosure, the strength of the hot press formed member was not secured at 1800 MPa or more.

Further, in Comparative Example 8 which is the manufacturing process satisfying an example embodiment of the present disclosure, but having an alloy composition being out of the present disclosure, the hardenability was not sufficiently secured due to the low manganese content, so that the strength of the hot press formed member was poor.

FIG. 1 is a drawing showing the results of GDS measurement of the steel sheet for hot press forming corresponding to Inventive Example 1.

As shown in FIG. 1, it was confirmed that there was an area in which the carbon content at a certain depth in the thickness direction of the base steel sheet in the interface between the base steel sheet and the plating layer was lowered as compared with the carbon content of the base steel sheet.

FIG. 2 is a photograph of the results of measuring the thickness cross section of the steel sheet for hot press forming corresponding to Inventive Example 1 with SEM.

As shown in FIG. 2, it was confirmed that there was an internal oxide at a certain depth in the thickness direction of the base steel sheet from the interface between the base steel sheet and the plating layer.

FIG. 3 is the TEM results of observing the steel sheet for hot press forming corresponding to Inventive Example 1 at a 1/4 point in the thickness direction of the base steel sheet.

As shown in FIG. 3, it was confirmed that spherical fine carbides were formed in the base steel sheet.

## Claims

1. A plated steel sheet for hot press forming comprising: a base steel sheet including 0.30 to 0.50% by weight of carbon (C), and an aluminum-based plating layer formed on at least one surface of the base steel sheet,
wherein an area in which a ratio (Cₘᵢₙ/C₀) between a minimum carbon content (Cₘᵢₙ) in a surface layer part and a carbon content (C₀) in the base steel sheet satisfies 0.5 to 0.8 is included, the surface layer part being defined as being within 30 µm in a thickness direction of the base steel sheet from an interface between the base steel sheet and the aluminum-based plating layer.

2. The plated steel sheet for hot press forming of claim 1,
wherein an internal oxide is included within a depth of 0.5 to 5.0 µm in the thickness direction of the base steel sheet from the interface between the base steel sheet and the aluminum-based plating layer, and
the internal oxide is formed in a grain boundary.

3. The plated steel sheet for hot press forming of claim 1, wherein the base steel sheet includes one or more carbides of V-based carbides, Mo-based carbides, and V-Mo composite carbides at 10⁵/mm² or more.

4. The plated steel sheet for hot press forming of claim 3, wherein the carbides have an average size of 1 to 100 nm.

5. The plated steel sheet for hot press forming of claim 1, wherein the base steel sheet further includes, by weight: 0.05 to 1.00% of silicon (Si), 0.4~3.0% of manganese (Mn), 0.001 to 0.050% of phosphorus (P), 0.0001 to 0.0200% of sulfur (S), 0.01 to 0.10% of aluminum (Al), 0.001 to 0.020% of nitrogen (N), 0.0001 to 0.0100% of boron (B), 0.01 to 0.50% of chromium (Cr), 0.010 to 0.050% of titanium (Ti), a total content of 0.10 to 0.50% of one or more of molybdenum (Mo), niobium (Nb), and vanadium (V), a remainder of Fe, and unavoidable impurities.

6. The plated steel sheet for hot press forming of claim 1, wherein the aluminum-based plating layer includes, by weight: 6.0 to 12.0% of silicon (Si), 1.0 to 9.0% of iron (Fe), a remainder of Al, and other unavoidable impurities.

7. The plated steel sheet for hot press forming of claim 1, wherein the aluminum-based plating layer has a thickness of 5 to 40 µm.

8. A method for manufacturing a plated steel sheet for hot press forming, the method comprising:
preparing a steel slab including 0.30 to 0.50% by weight of carbon (C), and heating the steel slab in a temperature range of 1050 to 1300°C;
after the heating, finish hot rolling the steel slab in a temperature range of 800 to 950°C to obtain a hot-rolled steel sheet;
winding the hot-rolled steel sheet in a temperature range of 500 to 700°C;
after the winding, performing an annealing treatment of heating the hot-rolled steel sheet in a temperature range of 740 to 860°C, and then maintaining the steel sheet for 50 to 150 seconds in an atmosphere of a dew point of -10 to +20°C;
after the annealing treatment, performing a first carbon diffusion of cooling the hot-rolled steel sheet at a cooling rate of 0.3 to 2.0°C/s in an atmosphere of a dew point of -30 to -60°C;
after the first carbon diffusion, dipping the hot-rolled steel sheet into an aluminum-based plating bath to obtain an aluminum-based plated steel sheet; and
performing a second carbon diffusion of cooling the aluminum-based plated steel sheet down to 400°C at a cooling rate of 4 to 12°C/s.

9. The method for manufacturing a plated steel sheet for hot press forming of claim 8, wherein the annealing treatment is performed with an atmosphere gas controlled to 5 to 15 vol% H₂-a remainder of N₂, and unavoidable impurities.

10. The method for manufacturing a plated steel sheet for hot press forming of claim 8, further comprising, before the annealing treatment of the hot-rolled steel sheet after the winding, performing cold rolling at a reduction rate of 20 to 80% to obtain a cold-rolled steel sheet.

11. The method for manufacturing a plated steel sheet for hot press forming of claim 8, wherein the steel slab further includes, by weight: 0.05 to 1.00% of silicon (Si), 0.4~3.0% of manganese (Mn), 0.001 to 0.050% of phosphorus (P), 0.0001 to 0.0200% of sulfur (S), 0.01 to 0.10% of aluminum (Al), 0.001 to 0.020% of nitrogen (N), 0.0001 to 0.0100% of boron (B), 0.01 to 0.50% of chromium (Cr), 0.010 to 0.050% of titanium (Ti), a total content of 0.10 to 0.50% of one or more of molybdenum (Mo), niobium (Nb), and vanadium (V), a remainder of Fe, and unavoidable impurities.

12. The method for manufacturing a plated steel sheet for hot press forming of claim 8, wherein the aluminum-based plating bath includes, by weight: 6.0 to 12.0% of silicon (Si), 1.0 to 9.0% of iron (Fe), a remainder of Al, and other unavoidable impurities.

13. The method for manufacturing a plated steel sheet for hot press forming of claim 8, wherein the obtaining of a plated steel sheet is performed in a plating amount of 30 to 130 g/m² based on one surface.

14. A hot press formed member comprising: a base steel sheet including 0.30 to 0.50% by weight of carbon (C), and an aluminum-based plating layer formed on at least one surface of the base steel sheet,
wherein an area in which a ratio (Cₘₐₓ/C₀) between a maximum carbon content (Cₘₐₓ) in a surface layer part and a carbon content (C₀) in the base steel sheet satisfies 0.8 to 1.1 is included, the surface layer part being defined as being within 30 µm in a thickness direction of the base steel sheet from an interface between the base steel sheet and the aluminum-based plating layer.

15. The hot press formed member of claim 14, wherein the base steel sheet includes one or more carbides of V-based carbides, Mo-based carbides, and V-Mo composite carbides at 10⁵/mm² or more.

16. The hot press formed member of claim 15, wherein the carbides have an average size of 1 to 100 nm.

17. The hot press formed member of claim 14, wherein the base steel sheet further includes, by weight: 0.05 to 1.00% of silicon (Si), 0.4~3.0% of manganese (Mn), 0.001 to 0.050% of phosphorus (P), 0.0001 to 0.0200% of sulfur (S), 0.01 to 0.10% of aluminum (Al), 0.001 to 0.020% of nitrogen (N), 0.0001 to 0.0100% of boron (B), 0.01 to 0.50% of chromium (Cr), 0.010 to 0.050% of titanium (Ti), a total content of 0.10 to 0.50% of one or more of molybdenum (Mo), niobium (Nb), and vanadium (V), a remainder of Fe, and unavoidable impurities.

18. The hot press formed member of claim 14, wherein the aluminum-based plating layer includes, by weight: 6.0 to 12.0% of silicon (Si), 1.0 to 9.0% of iron (Fe), a remainder of Al, and other unavoidable impurities.

19. The hot press formed member of claim 14, wherein the hot press formed member has a tensile strength of 1800 MPa or more.
